# EUROPÄISCHE PATENTSCHRIFT

(11) **EP 2 090 418 B1**
(45) Veröffentlichungstag und Bekanntmachung des Hinweises auf die Patenterteilung: **22.08.2012**
(21) Anmeldenummer: 09001486.1
(22) Anmeldetag: 04.02.2009
(51) Int. Cl.: B29C 51/16

(54) **Vorrichtung für die Zuführung von Banderolen**
Device for introducing stickers
Dispositif pour l'introduction de banderoles

(30) Priorität: 18.02.2008 DE 102008009706
(43) Veröffentlichungstag der Anmeldung: 19.08.2009
(73) Patentinhaber: Hassia Verpackungsmaschinen GmbH, 63691 Ranstadt (DE)
(72) Erfinder: Sorg, Friedrich, 35418 Buseck (DE)
(74) Vertreter: Lasch, Hartmut

(56) Entgegenhaltungen:
- EP-A- 0 600 259
- CH-A5- 585 617
- DE-A1- 3 837 706

## Beschreibung

Die Erfindung betrifft eine Vorrichtung für die Zuführung von Banderolen an damit zu beschriftende, zu dekorierende oder zu etikettierende Träger gemäß Oberbegriff des Patentanspruches 1.

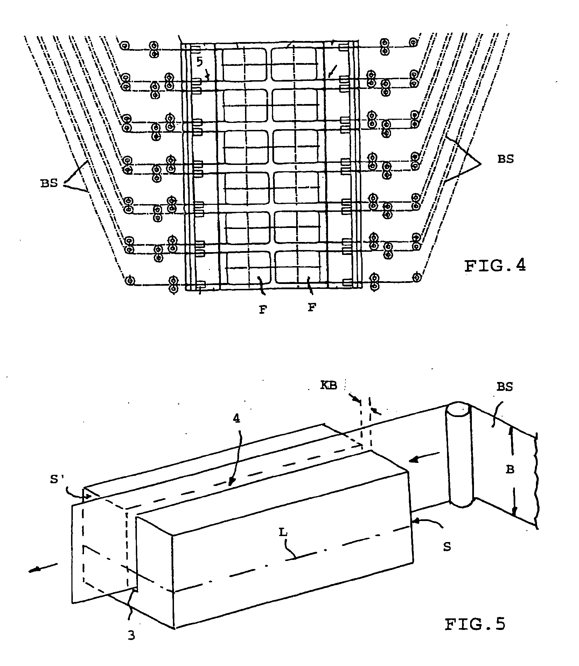

Derartige Vorrichtungen sind hinlänglich bekannt und in Benutzung, und zwar insbesondere im Verpackungsbereich. Dazu sei verwiesen bspw. auf DE 92 16 329 U1, bei deren Gegenstand es sich um eine Tiefziehmaschine mit einer solchen Banderolenzuführung handelt, wobei Banderolen an in eine Packstoffbahn eingeformte Becher anzubringen sind, die in diesem Falle die einleitend angeführten Träger darstellen. Bei solche Trägern kann es sich aber auch um solche anderer Art handeln. Abgesehen davon, sind solchen Vorrichtungen grundsätzlich geeignete Einrichtungen zur Zuleitung der Banderolenstreifen von einer oder mehreren Vorratsrollen vorgeschaltet und außerdem sind diese Vorrichtungen in der Regel zugangssseitig mit geeigneten Schneideinrichtungen ausgestattet, um vom endlos zulaufenden Banderolenstreifen trägergrößengerechte Abschnitte ablängen zu können (siehe Figur 4). Für die Führung der Banderolenstreifen bzw. der Streifenabschnitte sind in den Zuführungen schlitzartige Banderolen-Führungskanäle vorgesehen, die in ihrer Tiefe im Wesentlichen der Breite der Banderolenstreifen entsprechen bzw. die Tiefe muss dabei so bemessen sein, dass der Streifen nur um eine bestimmte Randhöhe aus dem Führungskanal herausragt, um in der Regel ebenfalls zu solchen Vorrichtung gehörende Transportgreifer am herausragenden Rand angreifen lassen zu können. Ähnliche Schlitzführungen weisen auch die Gegenstände nach der DE 38 37 706 A1 und der DE 31 26 904 C2 auf.

Der Erfindung liegt die Aufgabe zugrunde, solche Banderolenzufuhr-Vorrichtungen dahingehend umzugestalten und zu verbessern, dass damit auch unterschiedlich breite Banderolenstreifen verarbeitet und den betreffenden Trägern zugeführt werden können.

Diese Aufgabe ist mit einer Vorrichtung der eingangs genannten Art nach der Erfindung durch die im Kennzeichen des unabhängigen Patentanspruches angeführten Merkmale gelöst.
Vorteilhafte Weiterbildungen und konkrete Ausführungsformen ergeben sich nach den abhängigen Patentansprüchen.

Mit anderen Worten, und zunächst nur auf einen an der Vorrichtung vorhanden Führungskanal bezogen, besteht die erfindungsgemäße Lösung darin, den hier so genannten Grundkörper und damit dessen Führungskanal in seiner Längserstreckung gesehen zu teilen und den Teil das Kanales bzw. des Schlitzes, der den Schlitzboden mit enthält, als zum Grundkörper verstellbaren Schieber auszubilden. Dies führt vorteilhaft und auf elegante Weise dazu, dass in der einfachsten Ausführungsform schon einmal zwei unterschiedlich tiefe Führungskanäle eingestellt werden können, nämlich zum einen einen Führungskanal mit geringer Tiefe, wobei die Oberfläche des entsprechend eingestellten Schiebers den Boden des im Grundkörper verbliebenen Kanalteiles bildet, und zum anderen einen Führungskanal mit größerer Tiefe, wobei der Schieber mit seinem den Boden mit enthaltenden Kanalteil so auf den Grundkörper eingestellt ist, dass die Kanalteile zueinander fluchten.

Dabei kann im Schieber mindestens ein weiterer Schlitz beabstandet zum per se vorhandenen Schlitz angeordnet und dieser zusätzliche Schlitz mit einer anderen Tiefe bemessen werden, d. h., in diesem Falle ließen sich Schlitze mit drei unterschiedlichen Tiefen darstellen und damit drei Banderolenstreifen mit drei unterschiedlichen Breiten verarbeiten.
Abgesehen davon, dass dies, wie bisher üblich, die Bereithaltung von Vorrichtungen mit entsprechend unterschiedlich tiefen Führungskanälen entbehrlich macht, ist der nicht unbeträchtliche Zeitaufwand für einen solchen Austausch bzw. für die Umstellung auf Zuführvorrichtungen mit anderen Schlitztiefen wegen Verarbeitung geänderter Banderolenbreite ganz wesentlich reduziert, da dafür vorteilhaft nur noch eine entsprechende Verstellung des erfindungsgemäßen Schiebers erforderlich ist. Solche erfindungsgemäß erreichbaren, sowohl apparative als auch zeitliche Aufwandsreduzierungen sind insbesondere bei Verpackungsmaschinen von hohem Interesse, bei bzw. an denen abhängig von den zu banderolierenden Trägern unterschiedlich breite Banderolenstreifen verarbeitet werden müssen, wie dies insbesondere bei Tiefziehmaschinen der Fall ist, an denen die in einem Packstoffrapport vorhandenen Becher (hier die Träger) mit Banderolen zu belegen sind.

Die erfindungsgemäße Vorrichtung und deren vorteilhafte Weiterbildungen werden anhand der zeichnerischen Darstellung von Ausführungsbeispielen nachfolgend näher erläutert.

Es zeigt
- Figur 1: stark schematisiert und in Seitenansicht den Grundkörper der Vorrichtung mit dem zugeordneten Schieber;
- Figur 2: perspektivisch eine Teilansicht der Vorrichtung in einer Ausführungsform mit mehreren Führungskanälen;
- Figur 3: schematisch und in Draufsicht eine Ausführungsform des Schiebers für die Vorrichtung nach Figur 2;
- Figur 4: schematisch und in Draufsicht die Tiefziehstation einer Tiefziehmaschine mit beidseitig zugeordneten Zuführvorrichtungen der hier interessierenden Art für die Banderolenstreifen und
- Figur 5: eine der Figur 1 im Wesentlichen entsprechende aber perspektivische Darstellung, dies aber für einen Grundkörpers bisher verwendeter Art.

Die Vorrichtung für die Zuführung von Banderolen an damit zu beschriftende, zu dekorierende oder zu etikettierende Träger, besteht aus einem Grundkörper 1, in dem von Stirnseite S zu Stirnseite S' mindestens ein an den Banderolenquerschnitt angepasster, schlitzförmiger, von parallelen Flankenwänden 2 und einem Boden 3 begrenzter, beidendig offener Banderolen-Führungskanal 4 erstreckt ist. Hierzu wird auf Figur 5 verwiesen, die diesen Stand der Technik, von dem ausgegangen ist, vereinfacht darstellt. Der zu- und durchlaufende Banderolenstreifen ist mit BS bezeichnet. Die insoweit zugehörige Darstellung in Figur 4 zeigt beispielsweise den Banderolenzufuhrbereich zur Tiefziehstation einer Tiefziehverpackungsmaschine, in deren Tiefziehformen F die abgetrennten Banderolenabschnitte vor dem Tiefziehen eingebracht werden. Andere Anwendungsfälle, bspw. die Etikettierung von einzeln vorbeförderten Trägern, sollen mit diesem Ausführungsbeispiel einer Tiefziehmaschine nicht ausgeschlossen sein.

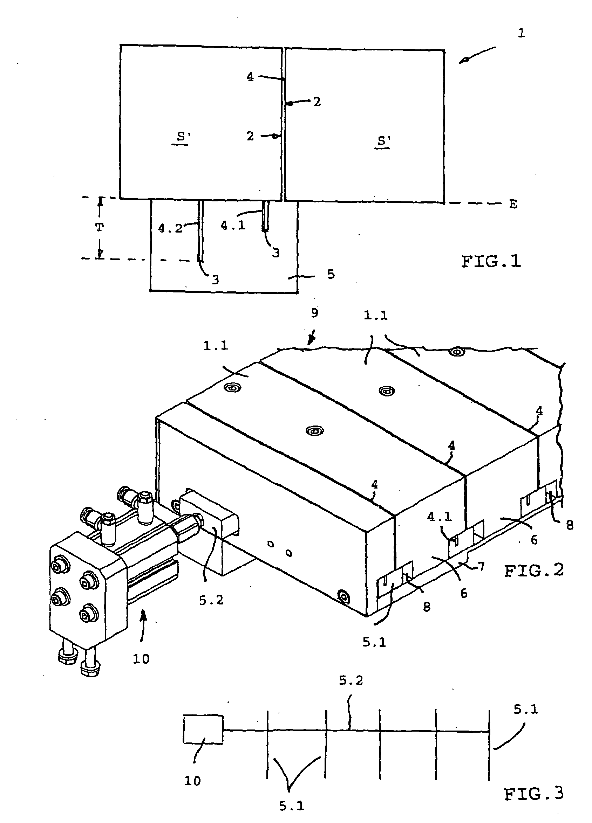

Um eine solche im Wesentlichen aus dem vorerwähnten Grundkörper 1 bestehende Banderolenzuführung für die Verarbeitung von Banderolenstreifen unterschiedlicher Breite B mit möglichst geringem Aufwand geeignet zu machen, ist nun wesentlich, dass ein den Boden 3 des Banderolen-Führungskanales 4 mit erfassender Kanalbereich 4.1 des Führungskanales 4 in einem quer zu dessen Erstreckung und in einer zum Grundkörper 1 gemeinsamen Gleitebene E verstellbaren Schieber 5 angeordnet ist. Figur 1 macht dies deutlich, die auch schon eine Weiterbildung mit erfasst, gemäß der im Schieber 5 mindestens ein weiterer, parallel zum Kanalbereich 4.1 erstreckter Kanalbereich 4.2 mit zum Kanalbereich 4.1 abweichender Tiefe T angeordnet ist. Verdeutlicht wird dies aber auch mit der perspektivischen Darstellung gemäß Figur 5, und zwar mit der dort eingezeichneten strich-punktierten Linie L, d. h., das Unterteil des dortigen Grundkörpers 1 hat man sich als abzutrennendes und als verstellbaren Schieber 5 umzufunktionierendes Teil vorzustellen.

Beim zwar stark schematisierten aber dennoch konkreten Ausführungsbeispiel nach Figur 1 ergeben sich drei Einstellungen für drei unterschiedliche Streifenbreiten:

Bei der dargestellten Position des Schiebers 5 dient diese zur Verarbeitung von am wenigsten breiten Banderolenstreifen, und größere Streifenbreiten werden durch Verstellen des Schiebers 5 nach rechts bedient, indem die Kanalbereiche 4.1 oder 4.2 im Schieber 5 mit dem Führungskanal 4 im Grundkörper 1 in fluchtende Position gebracht werden.

Unter Bezug auf die vorerläuterte Trennung des Grundkörpers 1 längs der Linie L in Figur 5 wird deutlich, dass der Grundkörper 1 praktisch in zwei Grundkörperteile 1.1 zerfällt, die mit ihren sich auf Kanalbreite KB gegenüberstehenden Flankenflächen 2 den nach allen Seiten offenen Führungskanal 4 begrenzen. Die Grundkörperteile 1.1 müssen also nebeneinander auf Kanalbreite KB zusammengehalten werden. Von den sich diesbezüglich ergebenden konstruktiven Möglichkeiten, wird die in Figur 2 dargestellte Ausführungsform bevorzugt, da diese am einfachsten zu verwirklichen ist und die darin besteht, dass die Grundkörperteile 1.1 mit Tragelementen 6 auf einer Tragplatte 7 angeordnet sind und in einem von Tragplatte 7, Tragelementen 6 und den Grundkörperteilwen 1.1 definierten Freiraum 8 der Schieber 5 angeordnet ist.

Da Banderolierungen in der Regel und wie am Beispiel der Figur 3 verdeutlicht gleichzeitig an mehreren Trägern bzw. an im Schritt-Takt geförderten Packstoffbahnen ausgeformten Bechern vorgenommen werden, sind unter Verweis auf Figur 2 mehrere Führungskanäle 4 durch mehrere auf der Tragplatte 7 angeordnete Grundkörperteile 1.1 zu einem Block 9 zusammengefasst angeordnet, wobei jedem Führungskanal 4 ein jeweils mit mindestens einem Kanalbereich 4.1 versehener Schieberteil 5.1 zugeordnet ist, welche Schieberteile 5.1 zu einem Schieber 5 zusammengefasst sind, da ja jedes Schieberteil 5.1 bei Wechsel der Banderolenbreite B verstellt werden muss. Einen derartigen aus mehreren Schieberteilen 5.1 bestehenden Schieber 5 hat man sich so vorzustellen, dass die Schieberteile 5.1 quasi rechenartig im Sinne der Figur 5 durch einen Längsverbinder 5.2 zusammengefasst sind, und ein solcher rechenartiger Schieber 5 von nur einer Verstelleinrichtung 10 verstellt werden kann, was in Figur 2 ebenfalls mit verdeutlicht ist, wonach seitlich neben dem mindestens einen Grundkörper 1 bzw. dem Block 9 eine hand- oder automatisch betätigbare Verstelleinrichtung 10 für den Schieber 5 angeordnet ist. Mit Rücksicht auf eine derartige Ausbildung des Schiebers 5 müssen die vorerwähnten Tragelemente 6 der Grundkörperteile 1.1 zumindest dort unterbrochen sein, wo sich der Längsverbinder 5.2 für die Schieberteile 5.1 erstreckt.

### Bezugszeichenliste

- 1: Grundkörper
- 1.1: Grundkörperteile
- 2: Flankenwände
- 3: Boden
- 4: Banderolen-Führungskanal
- 4.1, 4.2: Kanalbereich
- 5: Schieber
- 5.1: Schieberteil
- 5.2: Längsverbinder
- 6: Tragelement
- 7: Tragplatte
- 8: Freiraum
- 9: Block
- 10: Verstelleinrichtung

- B: Banderolenbreite
- BS: Banderolebstreifen
- E: Gleitebene
- F: Tiefziehform
- KB: Kanalbreite
- L: Linie
- S, S': Stirnseiten
- T: Kanaltiefe

## Patentansprüche

1. Vorrichtung für die Zuführung von Banderolen an damit zu beschriftende, zu dekorierende oder zu etikettierende Träger, enthaltend einen Grundkörper (1), in dem von Stirnseite zu Stirnseite (S, S') mindestens ein an den Banderolenquerschnitt angepasster, schlitzförmiger, von parallelen Flankenwänden (2) und einem Boden (3) begrenzter, beidendig offener Banderolen-Führungskanal(4) erstreckt ist,
**dadurch gekennzeichnet,**
**dass** ein den Boden (3) des Banderolen-Führungskanales (4) mit erfassender Kanalbereich (4.1) des Führungskanales (4) in einem quer zu dessen Erstreckung und in einer zum Grundkörper (1) gemeinsamen Gleitebene (E) verstellbaren Schieber (5) angeordnet ist.

2. Vorrichtung nach Anspruch 1,
**dadurch gekennzeichnet,**
**dass** im Schieber (5) mindestens ein weiterer, parallel zum Kanalbereich (4.1) erstreckter Kanalbereich (4.2) mit zum Kanalbereich (4.1) abweichender Tiefe (T) angeordnet ist.

3. Vorrichtung nach Anspruch 1 oder 2,
**dadurch gekennzeichnet,**
**dass** der Grundkörper (1) aus zwei Grundkörperteilen (1.1) gebildet ist, die mit ihren sich auf Schlitzbreite (B) gegenüberstehenden Flankenflächen (2) den Führungskanal (4) begrenzen.

4. Vorrichtung nach Anspruch 3,
dadurch gekensizeichnet,
dass die Grundkörperteile (1.1) mit Tragelementen (6) auf einer Tragplatte (7) angeordnet sind und in einem von Tragplatte (7), Tragelementen (6) und den Grundkörperteilen (1.1) definierten Freiraum (8) der Schieber (5) angeordnet ist.

5. Vorrichtung nach Anspruch 4,
**dadurch gekennzeichnet,**
**dass** mehrere Führungskanäle (4) durch mehrere auf der Tragplatte (7) angeordnete Grundkörperteile (1.1) zu einem Block (9) zusammengefasst angeordnet und jedem Führungskanal (4) ein jeweils mit mindestens einem Kanalbereich (4.1) versehener Schieberteil (5.1) zugeordnet ist, welche Schieberteile (5.1) zum Schieber (5) zusammengefasst sind.

6. Vorrichtung nach einem der Ansprüche 1 bis 5,
**dadurch gekennzeichnet,**
**dass** seitlich neben dem mindestens einen Grundkörper (1) eine hand- oder automatisch betätigbare Verstelleinrichtung (10) für den Schieber (5) angeordnet ist.

## Claims

1. A device for feeding bands on supports to be lettered, decorated or labelled with them, comprising a base body (1) in which at least one slotted band guide duct (4), adapted to the band cross-section, limited by parallel flank walls (2) and a base (3), is extended from front side to front side (S, S'),
**characterised in that**
a duct region (4.1) of the guide duct (4), including the base (3) of the band guide duct (4), is arranged in a slide (5) adjustable in a common sliding plane (E) common to the base body (1) and running transversely to its extension.

2. The device according to Claim 1,
**characterised in that**
at least one further duct region (4.2) extending parallel to the duct region (4.1) is arranged to a depth (T) deviating from the duct region (4.1).

3. The device according to Claim 1 or 2,
**characterised in that**
the base body (1) is formed from two base body parts (1.1) which limit the guide with their flank surfaces (2) opposing each other over the slot width (B).

4. The device according to Claim 3,
**characterised in that**
the base body parts (1.1) are arranged with supporting elements (6) on a support plate (7) and **in that** the slide (5) is arranged in a free space (8) defined by the support plate (7), supporting elements (6) and the base body parts (1.1).

5. The device according to Claim 4,
**characterised in that**
a plurality of guide ducts (4) are arranged together to form a block (9) from a plurality of base body parts (1.1) arranged on the support plate (7), and **in that** a slide section (5.1), each provided with at least one duct region (4.1), is assigned to each guide duct (4), which slide sections (5.1) are combined to form the slide (5).

6. The device according to any one of Claims 1 to 5,
**characterised in that**
an adjusting device (10) for the slide (5), which adjusting device can be actuated manually or automatically, is arranged laterally and adjacent to the at least one base body (1).

## Revendications

1. Dispositif pour l'introduction de banderoles au niveau d'un support pour ainsi porter dessus une inscription, une décoration ou une étiquette, contenant un corps de fond (1) dans lequel au moins un canal d'introduction de banderole (4) adapté à la section transversale de banderole, en forme de fente, délimité par des parois latérales (2) parallèles et un fond (3), ouvert aux deux extrémités s'étend du côté avant vers le côté avant (S, S'), **caractérisé en ce que** le fond (3) du canal d'introduction de banderole (4) doté d'une zone de canal (4.1) préhensible du canal de guidage (4) est disposé dans un coulisseau (5) pouvant être déplacé transversalement par rapport à son extension et dans un plan de glissement (E) commun au corps de fond (1).

2. Dispositif selon la revendication 1, **caractérisé en ce qu'**au moins une zone de canal (4.2) supplémentaire, s'étendant parallèlement à la zone de canal (4.1) est disposée dans le coulisseau (5) et présente une profondeur (T) différente de celle de la zone de canal (4.1).

3. Dispositif selon la revendication 1 ou 2, **caractérisé en ce que** le corps de fond (1) est formé de deux parties de corps de fond (1.1) délimitant le canal de guidage (4) avec leurs surfaces latérales (2) opposées l'une par rapport à l'autre sur la largeur de fente (B).

4. Dispositif selon la revendication 3, **caractérisé en ce que** les parties de corps de fond (1.1) dotées d'éléments porteurs (6) sont disposées sur une plaque de support (7) et que le coulisseau (5) est disposé dans un espace libre (8) défini par la plaque de support (7), les éléments porteurs (6) et les parties de corps de fond (1.1).

5. Dispositif selon la revendication 4, **caractérisé en ce que** plusieurs canaux de guidage (4) sont disposés ensemble en un bloc (9) à travers plusieurs parties de corps de fond (1.1) disposées sur la plaque de support (7) et qu'une partie de coulisseau (5.1) respectivement pourvue d'au moins une zone de canal (4.1) est associée à chaque canal de guidage (4), lesdites parties de coulisseau (5.1) étant réunies pour former le coulisseau (5).

6. Dispositif selon l'une quelconque des revendications 1 à 5, **caractérisé en ce qu'**un dispositif de déplacement (10) du coulisseau (5) pouvant être actionné manuellement ou automatiquement est disposé en côté à côté de l'au moins un corps de fond (1).
